## Europäisches Patentamt

## European Patent Office

## Office européen des brevets

(11) Veröffentlichungsnummer: **0 180 106**
**B1**

(12) # EUROPÄISCHE PATENTSCHRIFT

(45) Veröffentlichungstag der Patentschrift:
29.11.89

(51) Int. Cl.⁴: **B 65 G 15/64**

(21) Anmeldenummer: **85113219.1**

(22) Anmeldetag: **18.10.85**

(54) Steuervorrichtung zum Ausrichten eines um zwei Rollen umlaufenden endlosbandes.

(30) Priorität: **27.10.84 DE 3439456**

(43) Veröffentlichungstag der Anmeldung:
**07.05.86 Patentblatt 86/19**

(45) Bekanntmachung des Hinweises auf die Patenterteilung:
**29.11.89 Patentblatt 89/48**

(84) Benannte Vertragsstaaten:
**AT BE CH DE FR GB IT LI NL SE**

(56) Entgegenhaltungen:
**DD-A- 105 175**
**DE-A- 2 815 953**
**GB-A- 1 561 354**

(73) Patentinhaber: **ELTI Apparatebau und Elektronik GmbH,
Am Dornbusch 17-19, D-6106 Erzhausen (DE)**
Patentinhaber: **HOECHST AKTIENGESELLSCHAFT,
Postfach 80 03 20, D-6230 Frankfurt am Main 80 (DE)**

(72) Erfinder: **Kühnert, Hans-Günter Egbert, Lerchenweg 8,
D-6106 Erzhausen (DE)**

(74) Vertreter: **Zounek, Nikolai, Dipl.-Ing. et al, c/o KALLE
Niederlassung der Hoechst AG Patentabteilung
Postfach 3540,
Rheingaustrasse 190 D-6200 Wiesbaden 1 (DE)**

Beschreibung

Die Erfindung betrifft eine Steuervorrichtung zum Ausrichten eines um zwei Rollen umlaufenden Endlosbandes in Laufrichtung, mit einer angetriebenen Rolle und einer Umlenkrolle, wobei das eine Achsenende der Achse der Umlenkrolle, die quer zur Laufrichtung des Bandes liegt, in Laufrichtung durch einen Hubzylinder verstellbar ist und nahe jeder Bandkante ein Schaltelement angeordnet ist, das bei Kontakt mit der Bandkante ein Schaltsignal einer Steuerschaltung des Hubzylinders zum Aus- oder Einfahren eines Stössels zuleitet.

Beim Umlaufen von Endlosbändern, die über zwei oder mehrere Rollen geführt sind, ergeben sich bekannterweise nach längerer Betriebsdauer Schwierigkeiten mit dem Geradelauf der Bänder. Gründe für das «Aus-der-Spur»-Laufen der Bänder sind in erster Linie Abweichungen in den Konzentrizitäten der Rollen, in der mangelnden Parallelität der Rollenachsen, ferner unterschiedliche Erwärmungen an verschiedenen Stellen des einzelnen Bandes, unterschiedlicher Bandabrieb, ungleichmässige Lastverteilung auf dem Band und dergleichen mehr.

Eine Steuervorrichtung der eingangs beschriebenen Art ist aus der DE-A 2815953 bekannt, bei der ein Mattenband über eine Steuerwalze und eine Abtastwalze endlos umläuft. In die Abtastwalze sind Isolierbuchsen eingelassen, die metallene Kontaktringe aufnehmen und gegen das Metall der Abtastwalze isolieren. Mit den metallischen Kontaktringen sind Stromabnehmer in Verbindung, die einen Impuls an eine Steuereinheit weiterleiten. Das Mattenband ist mit einer schwachen Gleichstromspannung beaufschlagt und stellt eine Stromverbindung her, sobald es mit einem Kontaktring in Berührung gelangt. Der anliegende Stromabnehmer gibt einen Impuls an die Steuereinheit, die einen entsprechenden Befehl an ein Pneumatikventil weitergibt, das einen Steuerkolben über eine Luftleitung betätigt und die axiale Lage der Steuerwalze entsprechend korrigiert, um das Mattenband wieder geradeaus laufen zu lassen.

Eine ähnliche Steuervorrichtung ist in der GB-A 1 561 354 beschrieben, wobei Mikroschalter nahe der beiden Bandkanten angeordnet sind und beim Abweichen des Bandes vom Geradelauf durch die entsprechende Bandkante betätigt werden. Die Impulse dieser Mikroschalter werden Stösseln von Hubzylinder zugeführt, die entsprechend eine Umlenkwalze, über die das Band läuft, verstellen, um das Abweichen des Bandlaufes vom Geradelauf zu korrigieren.

Eine rein mechanische Abhilfe bis zu einem bestimmten Grad wird durch sogenannte bombierte Rollen anstelle von zylindrischen Rollen oder Walzen geschaffen. Es handelt sich dabei um Rollen oder Walzen, die über ihre Länge einen nicht gleichbleibenden Durchmesser besitzen und beispielsweise in der Rollen- bzw. Walzenmitte einen grösseren Durchmesser als nahe den Stirnflächen der Rolle bzw. Walze haben. Aber auch bei einer derartigen Ausgestaltung der Rollen ist es, ebenso wie bei zylindrischen Rollen, erforderlich, alle Rollen mit grösster Präzision möglichst identisch auszubilden, was die Herstellung der Rollen wegen der geforderten hohen Präzision erheblich verteuert.

Aufgabe der Erfindung ist es, eine Steuervorrichtung der eingangs beschriebenen Art so auszubilden, dass dem «Aus der Spur»-Laufen des Bandes, unabhängig davon, ob gegenüber der Laufrichtung des Bandes nach links oder rechts abgewichen wird, stets entgegengesteuert wird, um einen möglichst geraden Bandlauf in Laufrichtung zu erhalten.

Diese Aufgabe wird erfindungsgemäss dadurch gelöst, dass der Stössel des Hubzylinders eine an einem parallel zu der einen Bandkante verlaufenden Längsträger angebrachte Führung durchsetzt und mit seinem Ende der Rückseite eines Flügels gegenüberliegt, der den Querschnitt eines liegenden U aufweist, dessen beide Schenkel den Längsträger umfassen und durch eine Vertikalachse miteinander verbunden sind, um die der Flügel verschwenkbar ist. Dabei ist zweckmässigerweise das andere Achsenende der Achse der Umlenkrolle mit Spiel in einer lagefesten Augenschraube gelagert, wodurch erreicht wird, dass die Achse der Umlenkrolle durch den Hubzylinder um dieses lagefeste Achsenende als Drehpunkt verschwenkt wird.

In Ausgestaltung der Erfindung sitzt der Hubzylinder auf einem winkelförmigen Bock auf, der an dem Längsträger befestigt ist, und verläuft parallel zu diesem Längsträger und der anderen Bandkante ein weiterer Längsträger. In Ausgestaltung der Erfindung ist der Längsträger mit einem Querträger verbunden, der sich zwischen dem Ober- und Unterdrum des Bandes hindurch erstreckt und auf dessen Oberseite die beiden Schaltelemente in Gestalt von Mikroschaltern angeordnet sind.

Die Achsenenden der Achse der Umlenkrolle sind zweckmässigerweise in Augenschrauben gelagert, die parallel zu den Bandkanten zu beiden Seiten des Bandes angeordnet und durch den Querträger hindurchgeführt sind. Das Schraubenende der einen Augenschraube liegt an der Vorderseite des Flügels an. Die eine, an der Vorderseite des Flügels mit ihrem Schraubenende anliegende Augenschraube ist gegenüber dem Stössel des Hubzylinders seitlich versetzt. Die andere Augenschraube weist gegenüber dem Achsenende der Achse der Umlenkrolle ein bestimmtes Spiel auf, dass es ermöglicht, dass die Achse der Umlenkrolle innerhalb dieser Augenschraube verschwenkt werden kann, wenn der Stössel des Hubzylinders ausfährt, gegen die Rückseite des Flügels drückt und diesen in Laufrichtung des Bandes verschwenkt. Für die Auflage des Stössels und des Schraubenendes der an der Vorderseite des Flügels anliegenden Augenschrauben sind zweckmässigerweise in die Vorder- und Rückseite des Flügels Schrauben eingeschraubt, deren Köpfe Gegenlager für das Schraubenende der Augenschraube und das Ende des Stössels bilden.

In einer weiteren Ausgestaltung der Erfindung liegt an dem Längsträger eine Platte an, die ein Ständer abstützt, der sich durch einen Schlitz in der Platte erstreckt und den ein Bolzen mit der Platte lagefest verbindet. Die Platte ist dabei so ausgestaltet, dass sie parallel zu dem Längsträger eine durchgehende Führung aufweist, die von einer Augenschraube durchsetzt ist, dass die Augenschraube zu beiden Seiten aus der Platte vorsteht und mit dem Schraubenende an der Vorderseite des Flügels anliegt, während in dem Augenteil am anderen Ende das eine Achsenende der Achse der Umlenkrolle gelagert ist. Das andere Achsenende der Achse der Umlenkrolle ist in einer Augenschraube mit Spiel gelagert, die eine an dem anderen Längsträger befindliche Platte durchsetzt.

Zweckmässigerweise ist jede der beiden Augenschrauben mit einer Schraubenmutter verschraubt, die an dem Querträger bzw. den Platten anliegen und das Verschieben der Augenschrauben entgegen der Laufrichtung des Bandes begrenzen.

Die Erfindung ist nicht auf ein Endlosband beschränkt, das nur um zwei Rollen umläuft, vielmehr ist sie ebenso bei Endlosbändern anwendbar, die über mehr als zwei Rollen laufen. Mit der Erfindung wird der Vorteil erzielt, dass ohne Stillsetzen des Bandantriebs das Abweichen des Bandes nach links oder rechts von der geraden Laufrichtung durch Auslenken der Achse einer der Rollen, im allgemeinen der Umlenkrolle, aus ihrer Parallellage zu der Achse einer weiteren Rolle, bei der es sich um eine angetriebene Rolle handelt, oder den Achsen mehrerer Rollen korrigiert wird.

Die Erfindung wird im folgenden anhand von zwei zeichnerisch dargestellten Ausführungsbeispielen näher erläutert. Es zeigen:

Fig. 1 eine schematische perspektivische Ansicht einer ersten Ausführungsform der Steuervorrichtung nach der Erfindung und

Fig. 2 eine Draufsicht auf eine zweite Ausführungsform der Steuervorrichtung nach der Erfindung.

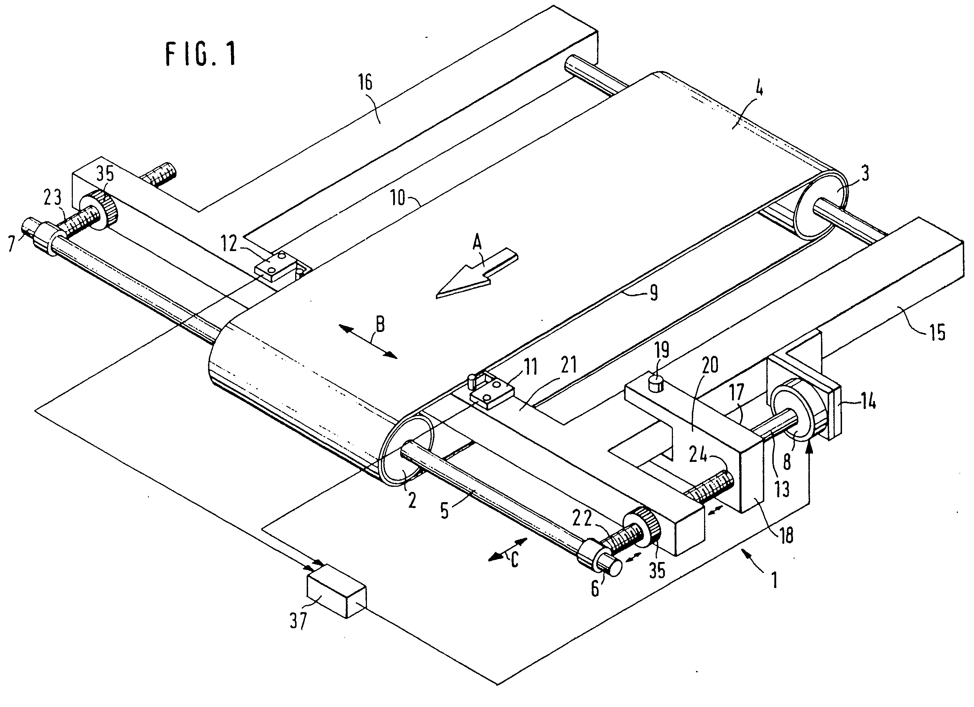

Fig. 1 zeigt in schematischer und perspektivischer Darstellung eine erste Ausführungsform der Steuervorrichtung 1 zum Verschwenken einer Achse 5 einer Umlenkrolle 2, über die sowie eine weitere Rolle 3, nämlich eine Antriebsrolle, ein Endlosband 4 geführt ist. Das Endlosband 4 ist im allgemeinen ein Transportband, auf dem beliebige Gegenstände wie beispielsweise Druckplatten befördert werden. Die nachstehende, noch im einzelnen beschriebene Steuervorrichtung 1 ist ganz allgemein anwendbar, um ein seitliches Verlaufen eines über Rollen geführten Endlosbandes zu verhindern. Beispielsweise kann eine derartige Steuervorrichtung 1 in einer Heizvorrichtung, wie sie in der deutschen Patentanmeldung P 34 20 429.6 vorgeschlagen wird, eingesetzt werden. Die dort vorgeschlagene Heizvorrichtung weist zwei endlos umlaufende Transportbänder auf, von denen jedes über je zwei Rollen geführt ist. Das untere Transportband ist über eine Tansportrolle und eine Antriebsrolle geführt, die ein Motor antreibt. Die Unterseite des Obertrums des Transportbandes gleitet im Kontakt beim Umlauf des Transportbandes über eine plane Heizplatte eines lagefesten Elektroheizkörpers und wird dabei aufgeheizt. Das obere, nicht angetriebene Transportband läuft über die Transportrollen um und steht im leichten Druckkontakt mit dem angetriebenen unteren Transportband, so dass es von diesem durch Friktion mitgenommen wird und sich ein Synchronlauf der beiden Transportbänder einstellt. Das Untertrum des oberen Transportbandes gleitet im Kontakt über eine Heizplatte des oberen Elektroheizkörpers, der das Transportband aufheizt. Ein von den Transportbändern nach dem Eintritt in die Heizvorrichtung erfasster und weiterbeförderter Schichtträger, der auf beiden Seiten nach dem Austritt aus der Heizvorrichtung mit Fotoresistfilm laminiert werden soll, wird durch die Transportbänder beidseitig aufgeheizt.

Bei Endlosbändern ergibt sich im allgemeinen bei längerer, ununterbrochener Betriebsdauer das Problem, dass das Band seitlich von der vorgegebenen geraden Laufrichtung ausgelenkt wird, die Gründe hierfür können u.a. geringe Unterschiede in der Parallelität der Achsen der Rollen sein, geringfügige Abweichungen der Aussendurchmesser der Rollen voneinander, unterschiedliche Wärmeverteilungen in den Bändern, u. dgl. mehr.

Die Achse der Antriebsrolle 3 ist in Längsträgern 15 und 16 gelagert, die parallel zu den Bandkanten 9 und 10 des Bandes 4 verlaufen. Die Längsträger 15 und 16 sind mit einem Querträger 21 verbunden, der sich zwischen dem Ober- und Untertrum des Bandes 4 hindurch erstreckt und auf dessen Oberseite zwei Mikroschalter 11 und 12 angeordnet sind. Jeder dieser Mikroschalter 11 und 12 sitzt sehr nahe an einer der beiden Bandkanten 9 und 10. Sowie ein seitliches Verlaufen des Bandes 4 auftritt, berührt je nach der Richtung der Auslenkung des Bandes 4 entweder die Bandkante 9 die Schaltfahne des Mikroschalters 11 oder die Bandkante 10 die Schaltfahne des Mikroschalter 12. Sobald der Kontakt zwischen einer der Bandkanten und dem entsprechenden Mikroschalter hergestellt ist, wird ein Hubzylinder 8 über eine Steuerschaltung 37 mit einem Schaltsignal beaufschlagt, so dass ein Stössel 13 des Hubzylinders 8 ein- oder ausgefahren wird.

Die Achse 5 der Umlenkrolle 2 ist mit ihren Achsenenden 6 und 7 in Augenschrauben 22, 23 gelagert, die parallel zu den Bandkanten 9 und 10 zu beiden Seiten des Bandes 4 angeordnet sind. Die Augenschrauben 22 und 23 sind durch den Querträger 21 hindurchgeführt, und jede ist mit einer Schraubenmutter 35 verschraubt, die an dem Querträger 21 anliegen und das Verschieben der Augenschrauben entgegen der Laufrichtung A des Bandes 4 begrenzen. Ein Schraubenende 24 der einen Augenschraube 22 liegt an einer Vorderseite 20 eines Flügels 18 an, während das Schraubenende der anderen Augenschraube 23 frei aus der Rückseite des Querträgers 21 herausragt.

Der Hubzylinder 8 ist auf einem winkelförmigen Bock 14 angebracht, der an dem einen Längsträger 15 befestigt ist. Der Stössel 13 des Hubzylinders 8 liegt mit seinem Ende der Rückseite 17 des Flügels gegenüber, der den Querschnitt eines liegenden U aufweist. Die beiden Schenkel des Flügels 18 umfassen den Längsträger 15 und sind durch eine Vertikalachse 19, die den Längsträger 15 durchsetzt, miteinander verbunden. Der Flügel 18 ist somit um die Vertikalachse 19 verschwenkbar. Die an der Vorderseite 20 des Flügels 18 mit ihrem Schraubenende 24 anliegende Augenschraube 22 ist gegenüber dem Stössel 13 des Hubzylinders 8 seitlich versetzt.

Das eine Achsenende 6 der Achse 5 der Umlenkrolle 2 wird in Laufrichtung A durch den Hubzylinder 8 verstellt, wie noch näher beschrieben werden wird, und das andere Achsenende 7 der Achse 5 ist hierfür mit geringem Spiel in der lagefesten Augenschraube 23 gelagert.

Die Steuervorrichtung 1 arbeitet wie folgt:

Wenn das Band 4 in Querrichtung B seitlich zu verlaufen beginnt, berührt beispielsweise zunächst die Bandkante 9 den Mikroschalter 11, der über die Steuerschaltung 37 den Hubzylinder 8 mit einem Steuersignal beaufschlagt, so dass der Stössel 13 ausgefahren wird, der den Flügel 18 in Laufrichtung A verschwenkt. Diese Bewegung wird über die Augenschraube 22 auf die Achse 5 der Umlenkrolle 2 übertragen. Das Achsenende 6 der Achse 5 wird in Richtung des Doppelpfeils C nach vorne verschwenkt, wobei das andere Achsenende 7 im Augenteil der lagefesten Augenschraube 23 wegen des vorhandenen Spiels als Drehpunkt der Achse 5 arbeiten kann. Die Achse 5 wird solange bzw. soweit verschwenkt, bis die Hubkraft des Hubzylinders 8 gleich der Spannkraft des Bandes 4 ist, das durch das Verschwenken der Achse 5 eine zusätzliche Spannung erhält, welche die Schwenkbewegung begrenzt. Durch das Verschwenken der Achse 5 wird dem «Aus-der-Spur»-Laufen des Bandes entgegengewirkt, eine der eingeschlagenen Querrichtung B der Bandbewegung entgegengesetzte Bewegung eingeleitet und das Band 4 über die Mitte der Bahnspur hinaus so lange bewegt, bis es den anderen Mikroschalter 12 betätigt.

Der Stössel 13 ist während dieses Zurückführens des Bandes ständig ausgefahren und liegt an dem Flügel 18 an. Beginnt das Band 4 über die Mitte der Bahnspur hinaus in die andere Richtung aus der Spur zu laufen, so wird der Mikroschalter 12 durch die Bandkante 10 geschaltet und dem Hubzylinder 8 über die Steuerschaltung 37 ein Steuersignal zugeführt, das den Stössel 13 einfahren lässt, wodurch die Achse 5 der Umlenkrolle 2 entgegen der Laufrichtung A in die Schwenkrichtung C durch die dann herrschende Zugspannung des Bandes 4 verschwenkt werden kann. Die Schraubenmutter 35 der Augenschraube 22 begrenzt dabei diese Schwenkbewegung der Achse 5 nach hinten, da sie die Schwenkbewegung stoppt, sobald sie an dem Querträger 21 anliegt.

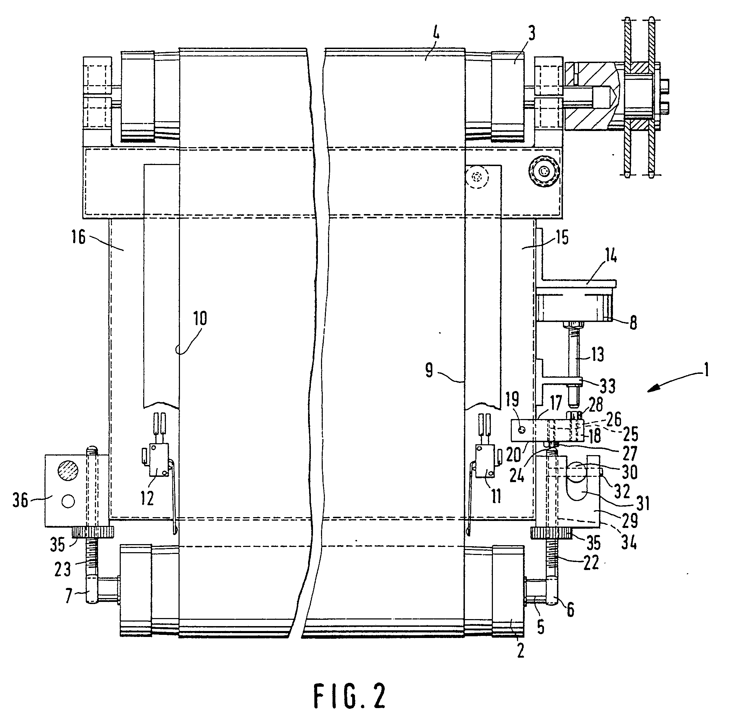

In Fig. 2 ist eine zweite Ausführungsform der Steuervorrichtung 1 in Draufsicht dargestellt, bei der übereinstimmende Bauteile mit der ersten Ausführungsform mit den gleichen Bezugszeichen belegt sind und nicht mehr näher beschrieben werden.

Gegenüber der Ausführungsform nach Fig. 1 ist bei der zweiten Ausführungsform noch eine Führung 33 vorgesehen, die an dem einen Längsträger 15 angebracht ist und von dem Stössel 13 des Hubzylinders 8 durchsetzt wird, der auf dem winkelförmigen Bock 14 aufsitzt, der an dem Längsträger 15 befestigt ist. Der Stössel 13 liegt mit seinem Ende der Rückseite 17 des Flügels 18 gegenüber. In die Vorder- und Rückseite 20 bzw. 17 des Flügels 18 sind Schrauben 25 und 26 eingeschraubt, deren Köpfe 27 und 28 verstellbare Gegenlager für das Schraubenende 24 der Augenschraube 22 und das Ende des Stössels 13 bilden. Der Stössel 13 ist gegenüber der Augenschraube 22 weiter nach aussen versetzt, so dass er ein entsprechend grosses Drehmoment auf den Flügel 18 ausüben kann. Anstelle des Querträgers 21 der ersten Ausführungsform sind an den Längsträgern 15 und 16 je eine Platte 29 bzw. 36 vorhanden, die an den Längsträgern 15 und 16 anliegen. Die Platte 29, die sich auf der gleichen Seite wie der Hubzylinder 8 befindet, wird von einem Ständer 30 abgestützt, der sich durch einen Schlitz 31 in der Platte 29 erstreckt und den ein Bolzen 32 mit der Platte 29 lagefest verbindet. Durch die Platte 29 läuft eine durchgehende Führung 34 parallel zu dem Längsträger 15, und diese Führung 34 wird von der Augenschraube 22 durchsetzt. Die Augenschraube 22 steht zu beiden Seiten aus der Platte vor und liegt mit ihrem Schraubenende an dem Kopf 27 der Schraube 25 an. Im Augenteil der Augenschraube 22 am anderen Ende ist das Achsenende 6 der Achse 5 der Umlenkrolle 2 gelagert.

Das andere Achsenende 7 der Achse 5 der Umlenkrolle 2 ist in der anderen Augenschraube 23 mit einem gewissen Spiel gelagert, das eine kleine Drehbewegung innerhalb des Augenteils der Augenschraube zulässt. Die Augenschraube 23 durchsetzt die Platte 36 in ähnlicher Weise wie die Augenschraube 22 die Platte 29. Die beiden Augenschrauben 22 und 23 dieser Ausführungsform sind gleichfalls zur Begrenzung des Schwenkweges der Achse 5 mit Schraubenmuttern 35 verschraubt, die bei entsprechend grossen Schwenkbewegungen der Achse 5 entgegen der Laufrichtung A des Bandes 4 an den Platten 29 und 36 anliegen.

## Patentansprüche

1. Steuervorrichtung zum Ausrichten eines um zwei Rollen (2, 3) umlaufenden Endlosbandes (4) in Laufrichtung mit einer angetriebenen Rolle (3)

und einer Umlenkrolle (2), wobei das eine Achsenende (6) der Achse (5) der Umlenkrolle (2) in Laufrichtung durch einen Hubzylinder (8) verstellbar ist und nahe jeder Bandkante ein Schaltelement (11, 12) angeordnet ist, das bei Kontakt mit der Bandkante (9, 10) ein Schaltsignal einer Steuerschaltung des Hubzylinders zum Aus- oder Einfahren eines Stössels (13) zuleitet, dadurch gekennzeichnet, dass der Stössel (13) des Hubzylinders (8) eine an einem parallel zu der einen Bandkante (9) verlaufenden Längsträger (15) angebrachte Führung (33) durchsetzt und mit seinem Ende der Rückseite (17) eines Flügels (18) gegenüberliegt, der den Querschnitt eines liegenden U aufweist, dessen beide Schenkel den Längsträger (15) umfassen und durch eine Vertikalachse (19) miteinander verbunden sind, um die der Flügel (18) verschwenkbar ist.

2. Steuervorrichtung nach Anspruch 1, dadurch gekennzeichnet, dass das andere Achsenende (7) der Achse (5) der Umlenkrolle (2) mit Spiel in einer lagefesten Augenschraube (23) gelagert ist.

3. Steuervorrichtung nach Anspruch 1, dadurch gekennzeichnet, dass der Hubzylinder (8) auf einem winkelförmigen Bock (14) aufsitzt, der an dem Längsträger (15) befestigt ist, und dass parallel zu diesem Längsträger und der anderen Bandkante (10) ein weiterer Längsträger (16) verläuft.

4. Steuervorrichtung nach Anspruch 3, dadurch gekennzeichnet, dass die Längsträger (15, 16) mit einem Querträger (21) verbunden sind, der sich zwischen dem Ober- und Untertrum des Bandes (4) hindurch erstreckt und auf dessen Oberseite die beiden Schaltelemente in Gestalt von Mikroschaltern (11, 12) angeordnet sind.

5. Steuervorrichtung nach Anspruch 1, dadurch gekennzeichnet, dass die Achsenden (6, 7) der Achse (5) der Umlenkrolle (2) in Augenschrauben (22, 23) gelagert sind, die parallel zu den Bandkanten (9, 10) zu beiden Seiten des Bandes (4) angeordnet und durch den Querträger (21) hindurchgeführt sind, und dass das Schraubenende (24) der einen Augenschraube (22) an der Vorderseite (20) des Flügels (18) anliegt.

6. Steuervorrichtung nach Anspruch 5, dadurch gekennzeichnet, dass die eine, an der Vorderseite (20) des Flügels (18) mit ihrem Schraubenende (24) anliegende Augenschraube (22) gegenüber dem Stössel (13) des Hubzylinders (8) seitlich versetzt ist.

7. Steuervorrichtung nach Anspruch 6, dadurch gekennzeichnet, dass in die Vorder- und Rückseite (20, 17) des Flügels (18) Schrauben (25, 26) eingeschraubt sind, deren Köpfe (27, 28) Gegenlager für das Schraubenende (24) der einen Augenschraube (22) und das Ende des Stössels (13) bilden.

8. Steuervorrichtung nach Anspruch 1, dadurch gekennzeichnet, dass an dem einen Längsträger (15) eine Platte (29) anliegt, die ein Ständer (30) abstützt, der sich durch einen Schlitz (31) in der Platte (29) erstreckt und den ein Bolzen (32) mit der Platte (29) lagefest verbindet.

9. Steuervorrichtung nach Anspruch 8, dadurch gekennzeichnet, dass die Platte (29) parallel zu dem einen Längsträger (15) eine durchgehende Führung (34) aufweist, die von einer Augenschraube (22) durchsetzt ist, dass die Augenschraube (22) zu beiden Seiten aus der Platte (29) vorsteht und mit dem Schraubenende an der Vorderseite (20) des Flügels (18) anliegt, während in dem Augenteil am anderen Ende das eine Achsenende (6) der Achse (5) der Umlenkrolle (2) gelagert ist.

10. Steuervorrichtung nach Anspruch 9, dadurch gekennzeichnet, dass das andere Achsenende (7) der Achse (5) der Umlenkrolle (2) in einer Augenschraube mit Spiel gelagert ist, die eine an dem anderen Längsträger (16) befindliche Platte (36) durchsetzt.

11. Steuervorrichtung nach Ansprüchen 5 oder 10, dadurch gekennzeichnet, dass jede der beiden Augenschrauben (22, 23) mit einer Schraubenmutter (35) verschraubt ist, die an dem Querträger (21) bzw. den Platten (29), 36) anliegen und das Verschieben der Augenschrauben entgegen der Laufrichtung A des Bandes (4) begrenzen.

**Claims**

1. A control device for aligning, in the running direction, an endless belt (4) revolving around two rollers (2, 3), comprising a driven roller (3) and a deflecting roller (2), one axe and (6) of the axle (5) of the deflecting roller (2) being adjustable in the running direction by means of a lifting cylinder (8), and a microswitch (11; 12) being arranged near each belt edge (9; 10), said microswitch, when coming in contact with the belt edge (9; 10), sending a switching signal to a control circuit (37) of the lifting cylinder (8) in order to extend or retract a ram (13), characterized in that the ram (13) of the lifting cylinder (8) passes through a guide (33) attached to one longitudinal member (15) extending parallel to one belt edge (9), the end of the ram (13) being located opposite the rear side (17) of a wing (18), the crosssection of which has the form of a horizontally arranged U, the two legs of which surround the longitudinal member (15) and are connected to one another by means of a vertical axle (19) about which the wing (18) can pivot.

2. A control device as claimed in claim 1, wherein the other axle end (7) of the axle (5) of the deflecting roller (2) is mounted with play in an eyebolt (23) fixed in position.

3. A control device as claimed in claim 1, characterized in that the lifting cylinder (8) rests on an angular block (14) fastened to the longitudinal member (15), and that a further longitudinal member (16) extends parallel to said longitudinal member (15) and to the other belt edge (10).

4. A control device as claimed in claim 3, characterized in that the longitudinal members (15, 16) are connected to a crossmember (21) which extends through between the upper and lower strands of the belt (4) and on the top side of which are arranged the two switching elements in the form of micro switches (11, 12).

5. A control device as claimed in claim 1, characterized in that the axle ends (6, 7) of the axle (5) of the deflecting roller (2) are mounted in eyebolts (22, 23) which are arranged parallel to the belt edges (9, 10) on both sides of the belt (4) and which are guided through the crossmember (21), and in that the bolt end (24) of one eyebolt (22) rests against the front side (20) of the wing (18).

6. A control device as claimed in claim 5, characterized in that one eyebolt (22), resting by means of its bolt end (24) against the front side (20) of the wing (18), is offset laterally relative to the ram (13) of the lifting cylinder (8).

7. A control device as claimed in claim 6, characterized in that screws (25, 26) are screwed into the front and rear sides (20, 17) of the wing (18), the heads (27, 28) of said screws (25; 24) constituing abutments for the bolt end (24) of one eyebolt (22) and the end of the ram (13).

8. A control device as claimed in claim 1, characterized in that a plate (29) rests against one longitudinal member (15) and supports a stay (30) which extends through a slot (31) in the plate (29) and which is connected to the plate (29) fixedly in position by a pin (32).

9. A control device as claimed in claim 8, characterized in that the plate (29) has parallel to one longitudinal meber (15) a continuous guide (34), through which an eyebolt (22) passes, that the eyebolt (22) projects from the plate (29) on both sides and rests by means of the bolt end against the front side (20) of the wing (18), whilst one axle end (6) of the axle (5) of the deflecting roller (2) is mounted in the eye part at the other ends.

10. A control device as claimed in claim 9, characterized in that the other axle end (7) of the axle (5) of the deflecting roller (2) is mounted with play in an eyebolt which passes through a plate (36) located on the other longitudinal member (16).

11. A control device as claimed in claim 5 or 10, characterized in that each of the two eyebolts (22, 23) is screwed to a bolt nut (35), the latter resting against the crossmember (21) or the plates (29, 36) and limiting the displacement of the eyebolts counter to the running direction A of the belt (4).

**Revendications**

1. Dispositif de commande pour aligner une bande sans fin (4) circulant sur deux rouleaux (2, 3) dans le sens de la marche, dispositif qui comprend un rouleau entraîné (3) et un rouleau de renvoi (2), et dans lequel l'une (6) des extrémités de l'axe (5) du rouleau de renvoi (2) peut être réglée dans le sens du défilement par un vérin (8) et où il est prévu, à proximité de chaque bord de la bande, un élément de commutation (11, 12) qui, en réponse au contact avec le bord (9, 10) de la bande, transmet un signal de commutation à un circuit de commande du vérin pour mettre un poussoir (13) en extension ou le rétracter, caractérisé en ce que le poussoir (13) du vérin (8) passe dans un guide (33) monté parallèlement au longeron (15) qui s'étend parallèlement à l'un (9) des bords de la bande et fait face par son extrémité à la face arrière (17) d'une palette (18) qui présente la forme de section d'un U couché dont les deux branches encadrent le longeron (15) et sont réunies l'une à l'autre par un axe vertical (19) autour duquel la palette (18) peut pivoter.

2. Dispositif de commande selon la revendication 1, caractérisé en ce que l'autre extrémité (7) de l'axe (5) du rouleau de renvoi (2) est tourillonnée avec jeu dans un boulon à œil (23) fixe en position.

3. Dispositif de commande selon la revendication 1, caractérisé en ce que le vérin (8) est monté sur un support (14) en forme d'équerre qui est fixé au longeron (15) et en ce qu'un autre longeron (16) s'étend parallèlement à ce longeron à l'autre bord (10) de la bande.

4. Dispositif de commande selon la revendication 3, caractérisé en ce que les longerons (15, 16) sont reliés à une traverse (21) qui passe entre le brin supérieur et le brin inférieur de la bande (4) et sur la face supérieure de laquelle sont agencés les deux éléments de commutation constitués par des micro-interrupteurs (11, 12).

5. Dispositif de commande selon la revendication 1, caractérisé en ce que les extrémités (6, 7) de l'axe (5) du rouleau de renvoi (2) sont tourillonnées dans des boulons à oeil (22, 23) qui sont disposés parallèlement aux bords (9, 10) de la bande, des deux côtés de cette bande (4), et qui sont enfilés à travers la traverse (21), et en ce que l'extrémité côté vis (24) de l'un (22) des boulons à œil est adjacente à la face avant (20) de la palette (18).

6. Dispositif de commande selon la revendication 5, caractérisé en ce que l'un (22) des boulons à œil qui est adjacent par son extrémité côté vis (24) à la face avant (20) de la palette (18) est déporté latéralement par rapport au poussoir (13) du vérin (8).

7. Dispositif de commande selon la revendication 6, caractérisé en ce que, dans la face avant et dans la face arrière (20, 17) de la palette (18) sont vissées des vis (25, 26) dont les têtes (27, 28) forment des butées pour l'extrémité côté vis (24) de l'un (22) des boulons à œil et pour l'extrémité du poussoir (13).

8. Dispositif de commande selon la revendication 1, caractérisé en ce que, à l'un (15) des longerons, est adjacente une plaque (29) qui est supporté par un doigt (30) qui s'étend à travers une fente (31) formée dans la plaque (29) et qui est fixé rigidement à la plaque (29) par une broche (32).

9. Dispositif de commande selon la revendication 8, caractérisé en ce que la plaque (29) présente, parallèlement à l'un (15) des longerons, un guidage traversant (34) qui est traversé par un boulon à œil (22), en ce que le boulon à œil (22) émerge de la plaque (29) sur les deux côtés et est en appui par l'extrémité côté vis contre la face avant (20) de la palette (18), tandis que dans la partie œil, à l'autre extrémité, est tourillonnée l'une (6) des extrémités de l'axe (5) du rouleau de renvoi (2).

10. Dispositif de commande selon la revendication 9, caractérisé en ce que l'autre extrémité (7) de l'axe (5) du rouleau de renvoi (2) est tourillonnée avec jeu dans un boulon à œil qui traverse une plaque (36) montée contre l'autre longeron (7).

11. Dispositif de commande selon la revendication 5 ou la revendication 10, caractérisé en ce que chacun des boulons à œil (22,23) est vissé dans un écrou (35), les écrous étant en appui contre la traverse (21) ou contre les plaques (29, 36) et limitant le déplacement des boutons à œil dans le sens inverse du sens (A) du défilement de la bande (4).

# FIG. 1

EP 0 180 106 B1

EP 0 180 106 B1

FIG. 2

11